# EUROPEAN PATENT APPLICATION

(11) **EP 2 150 018 A1**
(43) Date of publication of application: **03.02.2010**
(21) Application number: 08252592.4
(22) Date of filing: 30.07.2008
(51) Int. Cl.: H04L 29/06, H04L 12/413, H04L 12/46

(54) **Header compression scheme**

(71) Applicant: BRITISH TELECOMMUNICATIONS public limited company, London EC1A 7AJ (GB)
(72) Inventor: The designation of the inventor has not yet been filed
(74) Representative: Lofting, Coreena Fiona Anne

(57) **Abstract**

A method of reducing the bandwidth required to send traffic comprising a payload and a header originating in a first communications network over another communications network, the traffic being characterised by having header information from which a path from its source to destination can be predetermined, the method comprising: determining redundant header information which is not used for forwarding said traffic in said other network; replacing at least part or all of said redundant header information with compression information having a smaller bandwidth than said replaced header information; appending header information to said traffic to enable forwarding along said path in said other network to an egress node; at the egress node, processing the traffic to remove the appended header information and restore the replaced header information by removing the compression information and using the compression information to perform a look-up operation which retrieves the replaced redundant header information from a data store, wherein the same compression information is used to replace the same redundant header information for all said traffic having the same predetermined path.

## Description

The present invention relates to a header compression scheme, in particular but not exclusively to a header compression scheme which improves the bandwidth efficiency of carrier Ethernet communication protocols.

Ethernet was originally devised as a local area network (LAN) communications protocol which operates in a connection-less "packet" or "frame" based communications mode. Ethernet-derived protocols having connection-oriented characteristics have been recently developed. Connection-oriented Ethernet protocols send Ethernet traffic frames over predetermined paths and are suitable for longer distance communication as well as short distance communication. As historically Ethernet networks were relatively localised in geographic extent, in order to send traffic over longer distances, a number of different network domains may be encountered.

In order to send traffic along a path which utilises the communications links of another network domain, a carrier service over that network is used. This requires a suitable point of interconnection between the networks and the carrier and client need to agree the service characteristics for sending client traffic over the carrier network domain.

The relatively large size of the Ethernet frame header compared to rival technologies means that bandwidth is used less efficiently when Ethernet carrier services are provided compared to Multi-Protocol Label Switching (MPLS) for short length client payloads. Short length payloads include, for example, the payloads typically associated with voice communications packets, for example, Voice over Internet Protocol (VoIP). As the size of the Ethernet header is larger than such small payloads they are generally, using current methods, not efficiently carried by Ethernet as a result. The problem of bandwidth inefficiency is increased when the client traffic comprises Ethernet frames which each carry a small payload and which then need to utilise one or more Ethernet carrier networks. As each carrier Ethernet network will require its own Ethernet header to be appended, this increases the amount of additional header information to be sent over the network compared to the original payload.

Header compression schemes in one form or another are already known in the art. However, these operate on timescales which are not suitable for adaptation to Ethernet traffic due to the very high speed communications links that Ethernet can utilise now that Terabit communication speeds are available. For example, relatively slow speed header compression schemes are known in the art for TCP header compression (for example, as described in the Internet Engineering Task Force (IETF) Request For Comments (RFC) 1144 entitled "Compressing TCP/IP Headers for Low-Speed Serial Links") and for Real Time Protocol (RTP) header compression.

These schemes compress the traffic headers at the transport layer and above, i.e., at layers in the Open Systems Interconnection (OSI) communications stack above Ethernet which is a link level communications protocol). For example, the TCP header compression scheme described in RFC 1144 is used to compress packet IP and TCP headers. RTP header compression is also known to compress a combination of IP, UDP, and RTP headers on a link-by-link basis and is described IETF RFC 2508. Moreover, the TCP and RTP header compression at layer 3 and higher layers in the OSI hierarchy is performed by routers before sending packets to layer 2 switches, which means that header compression must be performed on a link-by-link basis. This increases the delay caused by the compression scheme as each time the compressed traffic is received by another layer 3 node, it must be decompressed unless that node is able to determine all necessary routing information. As a result, to perform such a scheme across multiple routers, the routers would need to have the full layer-3 header information to route the packets, i.e., all nodes along the path of the compressed headers would need to be able to support the compression scheme implemented. Moreover, known TCP and RTP compression schemes are based on shared context information between the compressor and the decompressor and other information such as first-order difference and delta encodings for some fields.

Header compression techniques for MPLS are also known in the art and are described in the Request For Comments documents RFCs 4247 and 4901 circulated by the Internet Engineering Task Force. However known MPLS compression schemes utilise layer 3 or higher compression techniques which actually compress the RTP/UDP/IP headers which are then carried using MPLS traffic units and the MPLS headers retain their standard structure. In other words, in MPLS the traffic units contain traffic which has already been compressed at layer 3 or above, the actual MPLS headers themselves are not compressed.

### SUMMARY STATEMENTS OF INVENTION

The aspects of the invention are as set out by the accompanying independent claims and the preferred embodiments by the accompanying dependent claims, which may be combined in any appropriate way obvious to those of ordinary skill in the art.

The inventions seeks to provide a header compression scheme for an Ethernet carrier network which carries client Ethernet traffic. The scheme can be used for connection-less or connection-oriented versions of the Ethernet communications protocol, which is a layer two (data-link) protocol which ensures that the transmission of a unit of data from one network node to another (data link layer, OSI layer 2). It is responsible for ensuring that the bits received are the same as the bits sent. The compression scheme encapsulates MAC header information within another Ethernet frame to reduce the amount of bandwidth required in the Ethernet carrier network to carry client Ethernet traffic.

One aspect of the invention seeks to provide a method of reducing the bandwidth required to send a plurality of client traffic frames over a carrier communications network arranged to provide a carrier service to said client traffic frames, each client frame comprising client header information and client payload, the method comprising:
at an ingress node of said carrier network:
   determining redundant header information which is not used for forwarding said client frames in said carrier network;
   replacing at least part or all of said redundant header information with compression information having a smaller bandwidth than said replaced header information;
   appending header information to the payload of each said client frame to enable said client frame to be capable of being forwarded along a path in said carrier network to an egress node of said carrier network;
   at the egress node of said carrier network:
      processing each received traffic frame to extract compression information from each received traffic frame;
      using the extracted compression information to perform a look-up operation which retrieves the replaced redundant header information from a data store; and
      restoring the client frame by appending the header information retrieved from said data store to the client payload;
wherein the same compression information is used to replace the same redundant header information for all said traffic having the same set of header characteristics.

In one embodiment, said set of header characteristics comprises at least one or more header fields taken from a group including one or more of the following:
a header field which uniquely identifies a source address of the client traffic; and/or
a header field which uniquely identifies a destination address of the client traffic; and/or
a header field which unique identifies a virtual local area network identifier of the client traffic; and/or
a service session identifier for said client traffic.

In one embodiment, said compression information is sent to the data store accessible by said egress node by the ingress node to said carrier network over a network management/control network for said carrier network.
In one embodiment, said compression information is generated when a predetermined path for said traffic over said carrier network is determined.

In one embodiment, at least some of said client traffic received by said ingress node conforms to a connection-less Ethernet protocol.

In one embodiment, at least some of said client traffic received by said ingress node conforms to a connection-oriented Ethernet protocol.

In one embodiment, said carrier traffic conforms to a connection-oriented Ethernet protocol.

In one embodiment, said client traffic comprises Ethernet traffic and said compression information conforms to the data format of one or more standard multi-protocol label switching (MPLS) standard communications protocol label data values.

In one embodiment, the same compression information is used for each frame of traffic in the same traffic flow.

In one embodiment, said compression information is placed in the client payload prior to said carrier header information being appended to said client payload.

In one embodiment, said compression information is placed in said carrier header information.

In one embodiment, the same compression key is used for each frame of traffic in the same traffic flow.

In one embodiment, the carrier frame comprises a connection-oriented Ethernet frame including an Ethertype value which indicates the carrier frame payload includes said compression information for a client traffic frame.

Another aspect of the invention seeks to provide a communications system comprising a first communications network and at least one carrier communications network, the communications system being arranged to reduce the bandwidth required to send traffic comprising a payload and a header from said first network over said carrier network, the traffic being characterised by one or more header fields from which a path from its source to destination can be predetermined, the system comprising:
a boundary node at a boundary between said carrier network and said first network; and
an egress node in a carrier network;
wherein the boundary node comprises one or more components arranged to:
determine redundant header information which is not used for forwarding said traffic in said carrier network;
replace at least part or all of said redundant header information with compression information having a smaller bandwidth than said replaced header information; and
append header information to said traffic to enable forwarding along said path in said carrier network to said egress node; and
wherein the egress node comprises one or more components arranged to:
process said received traffic to remove the appended header information and restore the replaced header information by removing the compression information; and
use the compression information to perform a look-up operation which retrieves the replaced redundant header information from a data store, and
wherein the same compression information is used to replace the same redundant header information for all said traffic having the same header characteristics along said predetermined path in said communications system.

Another aspect of the invention seeks to provide a communications node for use in a communications system according to the above aspect, the node comprising one or more components arranged to:
determine redundant header information which is not used for forwarding said traffic in said carrier network;
replace at least part or all of said redundant header information with compression information having a smaller bandwidth than said replaced header information; and
append header information to said traffic to enable forwarding along said path in said carrier network to said egress node.

Another aspect of the invention seeks to provide a communications node for use in a communications system according to the above aspect, the node comprising one or more components arranged to:
process said received traffic to remove the appended header information and restore the replaced header information by removing the compression information; and
use the compression information to perform a look-up operation which retrieves the replaced redundant header information from a data store.

Another aspect of the invention seeks to provide a data store comprising compression information, the data store being arranged for use by an egress node in the communications system according to the above aspect.

Another aspect of the invention seeks to generate a compression key for use in a communications system according to the above aspect.

Some aspects of the invention accordingly seek to provide a header compression scheme to mitigate and/or obviate the bandwidth inefficiency associated with the use of carrier Ethernet for relatively small payloads, i.e., for payloads whose bandwidth requirements are less than or of the same order as the Ethernet frame header, including VoIP traffic.

An embodiment of the invention seeks to provide a header compression scheme for a layer two carrier technology such as Ethernet (especially connection-oriented or connectionless versions of the Ethernet communications protocols which support the separation of the Ethernet service layer from the underlying network layer such as that provided by Provider Backbone Bridging (PBB), , PBB Traffic Engineering (PBB-TE or Shortest Path Bridging with PBB )).

Preferred embodiments of the invention will now be described with reference to the accompanying drawings, which are by way of example only, and in which:
Figure 1 shows a communications system in which a header compression scheme can be implemented according to an embodiment of the invention;
Figure 2 shows schematically header generation at a first ingress node;
Figure 3A shows the header generation at a second ingress node without implementing a header compression scheme according to the invention;
Figure 3B shows the header generation at a second ingress node with a header compression scheme according to an embodiment of the invention;
Figure 4A shows a method of generating compression information based on traffic flow according to an embodiment of the invention;
Figure 4B shows steps in a method of generating compression information based on service instance according to another embodiment of the invention;
Figure 5 shows how a second ingress node processes a received frame to implement a header compression scheme according to the embodiments shown in Figures 4A and 4B;
Figure 6 shows how a second ingress node processes a received frame to dynamically generate header compression information and implement a header compression scheme according to another embodiment of the invention;
Figure 7 shows a method by which nodes in a network implementing a header compression scheme according to an embodiment of the invention process a compressed header and restore header information if the node is an egress node for that network;
Figures 8A and 8B show embodiments of the invention which implement a header compression scheme for a plurality of carrier networks;
Figure 9A shows a local compression information storage architecture according to an embodiment of the invention;
Figure 9B shows a centralised compression information storage architecture according to another embodiment of the invention;
Figure 9C shows a distributed compression storage architecture in which element managers associated with a plurality of edge nodes access a centralised compression information store;
Figure 10 shows how compression information can be distributed in a hierarchical compression information storage architecture by element managers; and
Figure 11 shows how compression information can be reused in a hierarchical compression information storage architecture.

The best mode of the invention will now be described. Those of ordinary skill in the art will be aware that the description of the invention has been simplified for clarity. Where features are apparent and already known to those of ordinary skill in the art as essential for the implementation of the invention these may be omitted from the description for brevity. The description may also omit to mention alternative features which are functionally equivalent to the features recited herein where these are well known in the art.

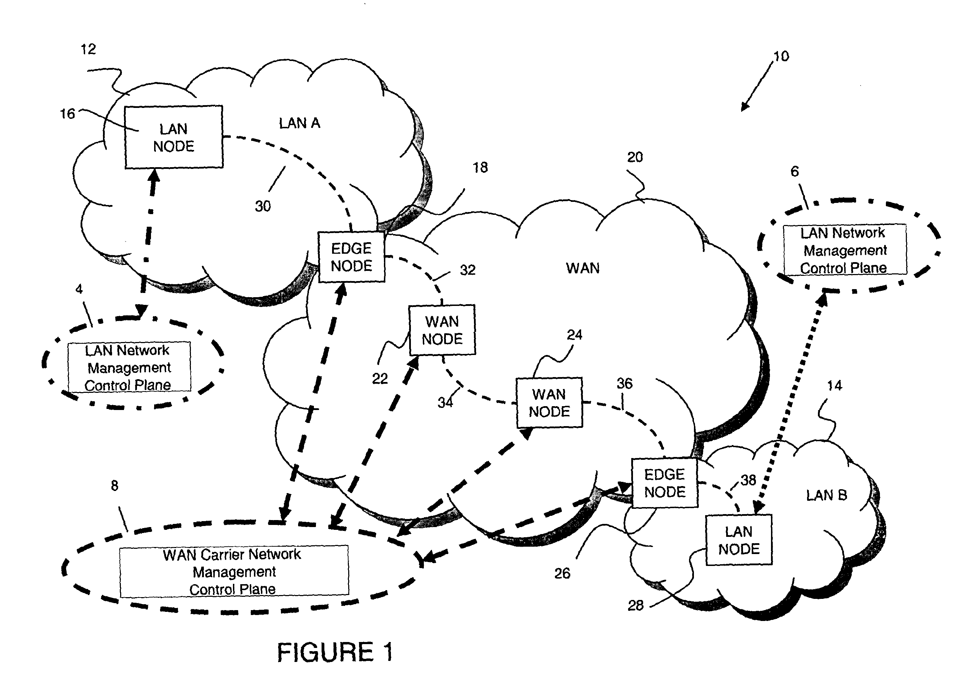

A communications system 10 according to an embodiment of the invention is shown in Figure 1 as comprising a first network (shown as LAN 12), a second network (shown as WAN 20) and a third network (shown as LAN 14). As those of ordinary skill in the art will realise, however, the geographic extent of each network can be different in other embodiments of the invention.

It is possible to encapsulate a client Media Access Control (MAC) header information either inside a carrier MAC header using the compression scheme or to encapsulate the MAC header information within the payload of the carrier Ethernet frame.

One embodiment of the invention maps one MAC header in side another. However, in an alternative embodiment the client MAC header is mapped inside the payload of the carrier frame. The data-link communications protocol used to convey the MAC header information is exemplified below and in the description with reference to Ethernet, which could be connection-less or connection-oriented. In one embodiment the compression scheme is implemented using Provider Backbone Bridging (PBB) or Provider Backbone Bridging with shortest path bridging, both of which are connectionless, as the carrier network protocol. Alternatively, the carrier network protocol could be connection oriented.

The following embodiment uses a connection-oriented communications protocol in which connections are established by the network management/control plane for the forwarding nodes in the carrier network. The header compression schemes in these embodiments are capable of being set up for any source of traffic which has header information characterisable in the client network for all the traffic frames of that traffic source which are to follow a predetermined path determined by the network management/control plane, for example, a traffic flow and/or service session.

In the embodiment shown in Figure 1, the second network 20 provides a connection-oriented carrier service to connection-oriented traffic received from first network 12. The connection-oriented protocol comprises, for example, a connection-oriented Ethernet communications protocol such as PBB-TE.

Within the first network 12, traffic is routed along predetermined paths determined by the network management/control plane 4 for the first network if the LAN is connection-oriented. If alternatively, the LAN behaviour is connectionless then the MAC-in-MAC encapsuation/decapsulation will occur at the edges of the carrier network WAN 20 and normal Ethernet bridging will apply not management. The paths are determined by the network management/control plane 4 configuring the forwarding tables used by the nodes 16, 18 in the first network 12. Within the second network 20, the network management/control plane 8 will configure the forwarding table of nodes 18, 22, 24, 26 in the second network 20. In the third network 12, the network management/control plane 6 will configure the forwarding tables used by nodes 26 and 28 to forward traffic along predetermined paths.

If LAN 12 supports a connection-less Ethernet protocol instead, then the header compression scheme will be implemented only at the edge of WAN 20, in which case normal Ethernet bridging would apply not network management to configure the path through the LAN 12. In this case, one embodiment of the header compression scheme would implement MAC-in-MAC encapsulation/decapsulation at the edges of the WAN 20.

The path that a traffic frame follows is determined when a node receiving the traffic frame processes the header of that frame to extract one or more header field values which are then used to perform a look-up operation on the forwarding table of that node. The look-up operation determines the next node that is to receive that particular traffic frame.

In Figure 1, a path is shown in which a communications traffic flow is sent along communications link 30 from node 16 in first network 12 to the boundary node 18 between the first and second networks. Within the second network 20, the traffic flow is along communications link 32 to node 22, then along communications link 34 to node 24, and finally along communications link 36 to node 26 at the boundary with third network 14. Traffic then flows from edge node 26 to node 28 along communications link 38 within third network 14.

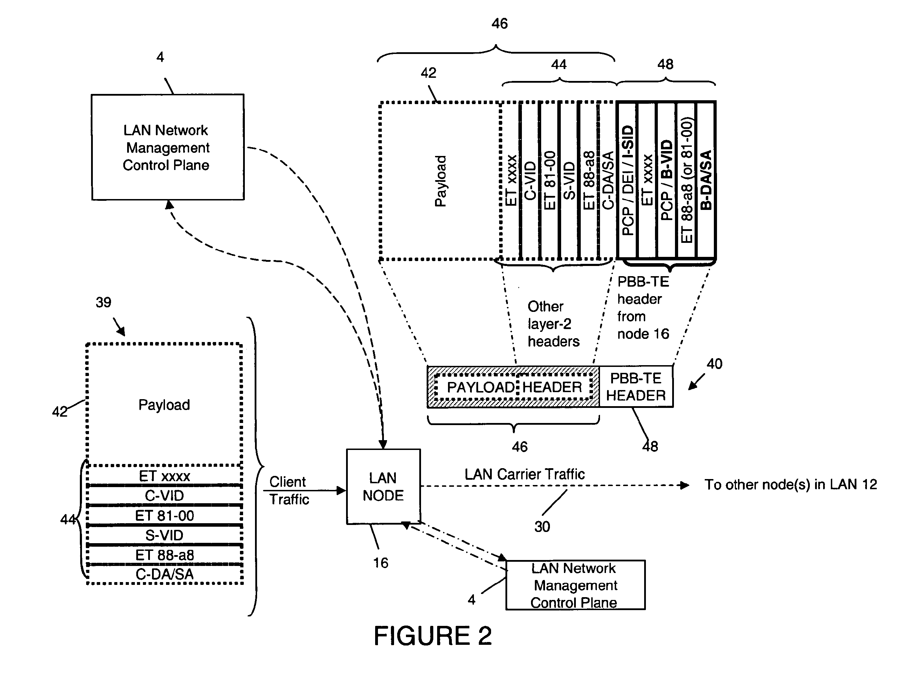

Figure 2 of the accompanying drawings shows an embodiment of the invention in which the first network 12 provides a connection-oriented Ethernet carrier service to Ethernet client traffic. As shown in Figure 2, the connection-oriented Ethernet carrier service is implemented using Ethernet frames which conform to the PBB-TE communications protocol. In Figure 2, node 16 receives a client traffic frame 39 comprising a payload 42 and a header 44. The node processes the header 44 to extract relevant routing information for the purposes of establishing a path across network 12 and then encapsulates the entire client traffic frame 39 including the payload 42 and header 44 in the payload 46 of carrier frame 40. This is possible as the client header 44 is effectively redundant in network 12 as it does not need to be processed by any other nodes in network 12 for forwarding the carrier frame.

The path taken by the frame 40 across network 12 is determined by the network management plane 4 of the first network 12 in any suitable way known to those of ordinary skill in the art. Thus as shown in Figure 2, the traffic frame 40 will be forwarded via communications link 30 to the next node along the predetermined path which will be determined using the forwarding table of node 16.

In the embodiment shown in Figure 2, the network management/control plane determines a route for the client traffic frame on a per traffic flow and/or per service session basis. Each frame of traffic which belongs to the same traffic flow and/or service session has one or more header field values which are the same. Thus the look-up operation performed by a node receiving each frame using the same header field values will locate the same node for forwarding the received traffic frame on to in their forwarding table. In this way, traffic frames in the same traffic flow and/or service session will follow the same predetermined path.

The look-up operation is based on certain header fields of the received Ethernet traffic frames (for example, such as a Media Access Control (MAC) source address (SA), a MAC destination address (DA), and virtual-LAN (VLAN) identifier tuple). Figure 2 shows schematically the type of header information generated at the node 16 the carrier header for a PBB-TE carrier service which maps the client frame 39 to the payload 46 and appends header 48 comprising a plurality of header fields including: a Priority Code Point (PCP), Drop Eligibility Indicator (DEI), I-SID (Service Instance Identifier) header field, an Ethertype field for the client traffic (ET xxxx), a Priority Code Point (PCP)/Backbone VLAN identifier (B-VID) field, another Ethertype field (ET 88-a8 or 81-00), and finally a backbone destination address/source address field (B-DA/SA). In embodiments of the invention which utilise other connection-oriented Ethernet protocols for the carrier service in the first network, different header information may be generated, for example the S-VID or service provider VLAN identifier. Obviously, if LAN 12 provides a connection-less service, then the header fields would be those associated with the connection-less Ethernet protocol (for example PBB (without TE) or Shortest Path Bridging with PBB).

As shown in Figure 1, the PBB-TE frame 40 is forwarded to node 18 which forms the boundary between the network domain of the first network 12 and the network domain of the second network 20. However, in order to send the client traffic frame 39 over the second network 20, the traffic in the first network 12 utilises the second network 20 as a carrier network.

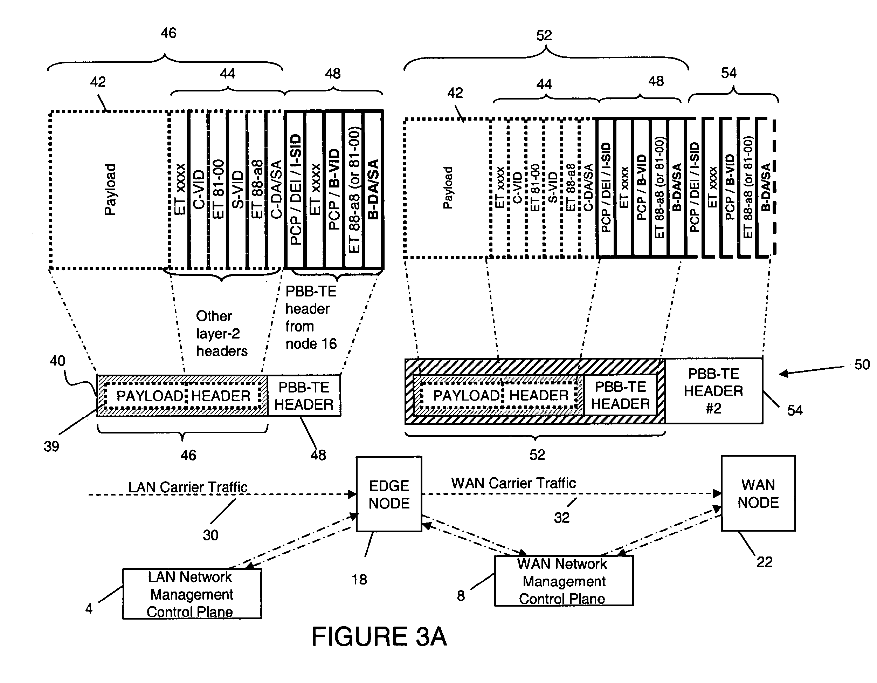

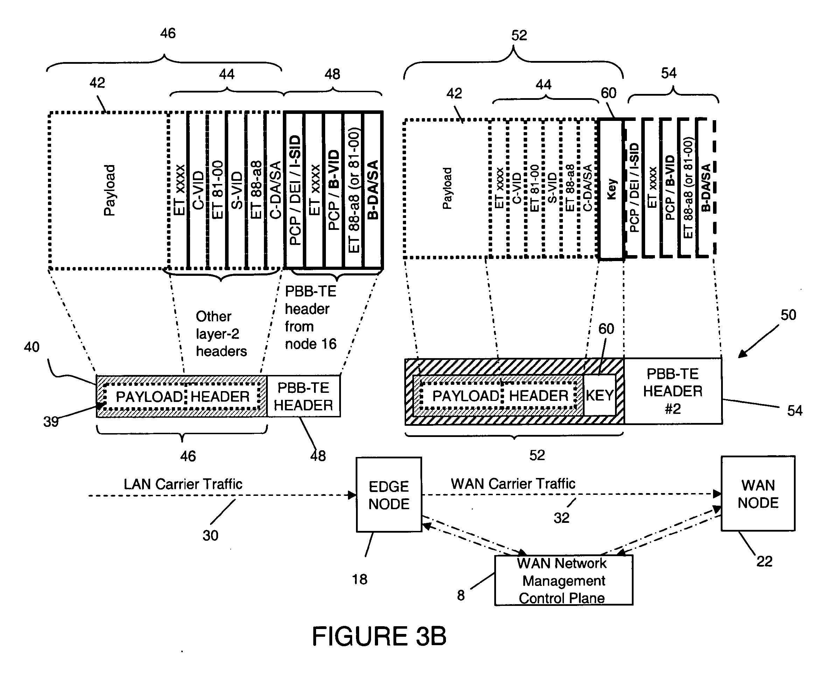

Figure 3A shows how the second network 20 provides a carrier service to first network 12 in the absence of a header compression scheme according to the invention, whereas Figure 3B shows schematically how a carrier service is provided which uses a header compression scheme according to an embodiment of the invention. The term "client" will refer to the first network 12 in the following description of Figure 3A and the term "carrier" to the second network 20.
In Figure 3A, client traffic frame 40 is mapped from a form conforming with a communications protocol supported within first communications network 12 into a form which conforms with a communications protocol supported within the second network 20. The mapping is performed by the node 18 which lies at the boundary between the first and second networks. In Figure 3A, at the node 18, the client frame 40 is encapsulated within carrier payload area 52 and an additional carrier header 54 is appended to form a carrier frame 50. Carrier header 54 comprises various header fields associated with the carrier service which are used to forward the carrier frame 650 across the second network 20 according to the forwarding information provided to each node along the path for the carrier frame.

When node 26 at the boundary between the second and third networks receives carrier frame 50, it will process the header 54 and determine that the traffic is to be forwarded via a node in the third network 14. Accordingly, at node 26 the carrier header 54 is removed and the carrier payload 52 is processed to de-encapsulate the client frame 40. The client frame 40 can then be forwarded on node 28 within third network 14 either using the de-encapsulated header 48 (if forwarding based on the header fields of header 48 is supported in the third network 14) or by re-encapsulating the header in the payload of another carrier service frame which is supported by the third network 14.

When the carrier network provides a carrier service for Ethernet client traffic, according to the Ethernet frame header fields 28 used for forwarding purposes in the first network 12 are retained fully in the payload 52 of the carrier frame 50. Accordingly, if the client traffic is PBB-TE for example, and the carrier network service provided is also implemented using the PBB-TE communications protocol, the provision of a PBB-TE carrier service for a PBB-TE client network will result in two PBB-TE headers being conveyed in the carrier network 20. However, only those fields in the outer PBB-TE header 54 associated with the carrier Ethernet frame 50 are used within the carrier network 20 to forward the carrier frame 50. A PBB-TE header consists of a 6 byte DA, 6 byte SA, 2 byte Ethertype, 2 byte B-tag, 2byte Ethertype, and 4 byte I-tag.

The transmission efficiency can be determined in a simple example by treating a standard IEEE 802.3 Ethernet frame as the payload of the carrier service. Such an Ethernet frame has a minimum payload of 46 bytes so the complete frame (with additional 18 bytes of header+FCS) has minimum size of 64 bytes.

This means that if the original payload 42 has smaller or comparable bandwidth requirements to each of the two carrier headers, for example, if the payload is generated by packetising voice traffic (e.g. VoIP), the bandwidth required just to send the header information makes the use of carrier Ethernet services very bandwidth inefficient. For example, consider when a carrier frame 50 in first network 12 is used to convey voice client traffic. An estimate of the bandwidth for a G.729 call which has an 8 Kbps codec bit rate with an Ethernet header, when the client traffic has a compressed Real Time Protocol (cRTP) or other compressed layer three communications protocol such as Universal Datagram Protocol (UDP) or Internet Protocol (IP) header and a default 20 bytes of voice payload is given by: Total client traffic packet size (bytes) = (Ethernet header of 14 bytes) + (compressed IP/UDP/RTP header of 2 bytes) + (voice payload of 20 bytes) + (Ethernet FCS of 4 bytes) = 40 bytes, although in practice the Ethernet frame is padded to 64 bytes to meet the minimum Ethernet frame size requirement. Here the compressed IP/UDP/RTP refers to the header compression which has been implemented in a layer above the carrier Ethernet layer (here at layer 3 as Internet Protocol/Universal Datagram Protocol/Real Time Protocol header compression has been performed).

This would imply that when the client traffic payload 42 comprises 20 bytes of bandwidth, 26 bytes of padding and 4 bytes, the client traffic header 44 comprise 16 bytes of bandwidth in total, if the first network 12 provides a PBB/PBB-TE carrier service, within network 12 it will use a 22 byte PBB/PBB-TE header 48 to carry a 64 byte payload 46 (we assume Ethernet frame 46 has no VLAN tags although Figure 2 depicts the more general scenario with both C and S-VLAN tags). Providing a PBB/PBB-TE carrier service in second network 20 requires the PBB/PBB-TE carrier frame 50 in the second network 20 to have a 22 byte PBB/PBB-TE header 54 which now carries a 64+22 = 86 byte payload 52, resulting in a bandwidth efficiency of 64/(64+22+22) = 59% for the traffic sent over the communications links 32,34,and 36 in the second network 20. If the traffic from second network 20 uses another carrier service in third network 14 which utilises PBB/PBB-TE, then another 22 bytes of header would be added in the third network resulting in an even lower bandwidth efficiency of 64/(64+22+22+22) = 49%. in the third network 14.

A header compression scheme according to the invention thus provides a MAC-in-MAC header compression scheme in which connection-less or connection-oriented MAC header information is encapsulated within the header (or payload) of another data-link layer communications protocol frame such as Ethernet, removing the need to send redundant client MAC information over a carrier network.

The embodiment described with reference to Figure 3B below is describes what can be referred to as a MAC-in-MAC-in-MAC compression scheme, but the invention works equally well just for MAC-in-MAC, in which case the LANs 12,14 shown in Figure 1 would all support connectionless Ethernet with the MAC-in-MAC header compression scheme occurring just at the edges of WAN 20.

Figure 3B shows a header compression scheme according to an embodiment of the invention in which the bandwidth efficiency is improved in a carrier network. The header compression scheme involves removing redundant header information 48 from the payload 52 of the carrier frames 50 within the carrier network 20 and instead replacing it with header compression information 60. The header compression information 60 is stored in association with the header information it has replaced at a data store accessible by at least one node along the predetermined path for that traffic frame. In this way, when a node receives the carrier frame including the compression information 60 and determines that the frame is to be de-encapsulated, it can use the compression information to retrieve the replaced header information from the data store.

The compression information 60 comprises data of a type suitable for use as a compression key to enable the original header information 48 to be recovered from a data store, for example, a compression key table. In one embodiment, a compression key is used having a similar format to that used to indicate a label in a MPLS communications protocol. The compression information 60 can be placed in the payload 52 of the carrier frame 50 as shown in Figure 3B, or elsewhere in the carrier frame, either at another payload location or, for example, written to a suitable header field or a header extension field of the carrier frame 50.

The node 18 which implements a compression scheme according to an embodiment of the invention uses the same compression information 60 to replace all frames of client traffic which have the same redundant header information in the carrier network. This reduces the amount of processing that is to be performed to generate the compression information as compression information needs to be unique on a per traffic flow and/or per service session and not per traffic frame.

### KEY GENERATION

The provision of compression information to one or more compression information data store accessible by nodes in the carrier network 20 is performed by the network management/control plane 8 of the carrier network 20.

The generation of the compression information in one embodiment of the invention is associated with the initial configuration of a predetermined path by the network management/control plane 4 of the first network 12 for client traffic in accordance with whatever connection-oriented communications protocol the first network 12 supports. This determines that a carrier network 20 needs to be utilised and the process of signalling the path requirements to the network management/control plane 8 of the carrier network 20 also causes the network management/control plane 8 of the carrier network to set up compression information for the particular client traffic that is to follow that path so that this information is available when each client traffic frame 50 reaches the ingress node 18 to the carrier network 20. Alternatively, the compression information can be generated by the carrier network management/control plane 8 when a client traffic frame requiring compression is received by an ingress node 18 to the carrier network 20.

The compression information 60 is used to replace redundant header information for all frames associated with a particular traffic flow and/or it can be used to replace header information for all frames associated with a particular service session flow. In the latter case, the compression information can be generated when a new service instance is requested from the network management/control plane of the client network which will generate a session flow. In this case all frames associated with the same session flow will then have their redundant header information replaced by the same compression information 60 in the carrier network 20.

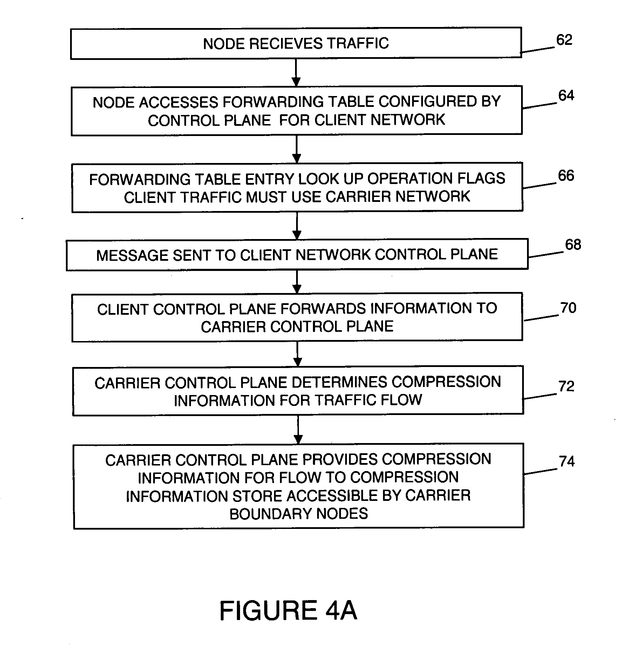

Figure 4A shows in more detail an exemplary method of generating compression information for a traffic flow according to an embodiment of the invention. As those skilled in the art will appreciate, the individual steps shown in the method in Figure 4A may be combined and/or reordered and/or replaced by an equivalent step in any apparent manner suitable.

In Figure 4A, the node 16 in the first network 12 receives traffic frame 39 and encapsulates this within the payload of a connection-oriented Ethernet frame (step 62, see also, for example, Figure 2 of the accompanying drawings). Node 16 then determines forwarding information for the frame by accessing the forwarding table (step 64) using a look-up operation.

The look-up operation uses one or more header field values for the received frame which identify the frame as belonging to a particular traffic flow, for example, all frames in the same traffic flow will carry at least the same MAC source address, MAC destination address, and will at least belong to the same Virtual LAN and so share the same VLAN identifier. The forwarding table look-up operation determines from the set of header field values the next node to forward the received frame to in that network which conforms to the path determined by network management/control plane 4 for that traffic flow to follow.

Thus the network management/control plane 4 of first network 12 configures all the forwarding tables of the nodes along the path so that all frames associated with the same traffic flow follow the same path to the boundary node 18 with the second network 20, which is to provide a carrier service and which implements a header compression scheme according to an embodiment of the invention.

Accordingly, in this embodiment of a header compression scheme, when the node 16 performs the look-up operation on the forwarding table for client frame 39, this flags to node 16 that that the route includes a carrier network 20 (step 66). The ingress node 16 sends an appropriate message to its network management/control plane 4 (step 68) which processes the message and signals the carrier network management/control plane 8 (step 70) with appropriate information to enable the carrier network management/control plane 8 to generate appropriate header compression information (step 72). The carrier network management/control plane 8 then provides the header compression information in the form of a suitable compression key to one or more compression information stores, for example, some persistent memory structure such as a data-base or look-up table, to ensure the compression information 60 is available and can be retrieved when the ingress node 18 along the predetermined route to the carrier network 20 receives the first network frame 50 and is required to replace header information 48 with the compression information 60. The carrier network management/control plane 8 can also populate the compression information data store which will be used by an egress node 26 if it has determined a predetermined path for the traffic flow at this point.

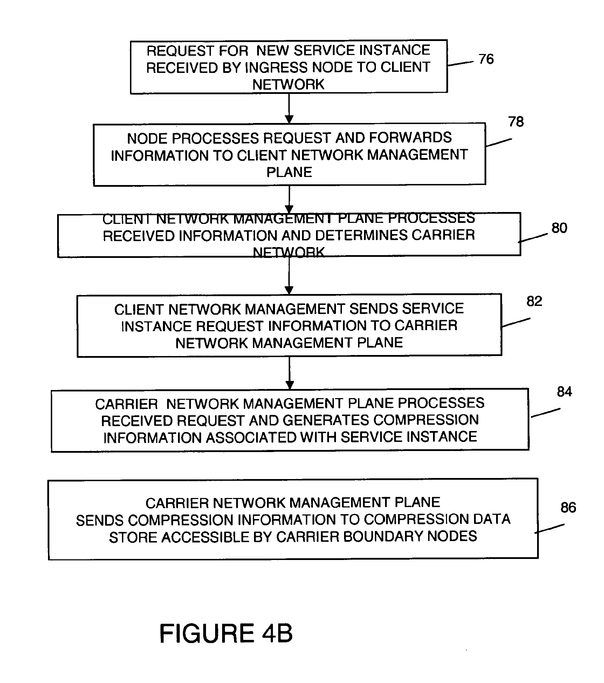

Figure 4B shows an alternative key generation method in which a compression key is generated for all frames sharing the same service session (or service flow identifier). For example, the same compression key can be used for all frames with the same value in the Service Instance iDentifier (SID) header field (for example, the I-SID header field when the connection-oriented Ethernet protocol is PBB-TE).

In Figure 4B, a request for a new service instance is received by node 16 of first network 12 (step 76). Node 16 processes the request and forwards appropriate information including the SID header field information to network management/control plane 4 (step 78). The network management/control plane 4 processes the received service request and sets up appropriate forwarding table information as appropriate within first network 12 and determines that the traffic is to be routed over carrier network 20 to reach its destination (step 80) and sends a message to the network management/control plane 8 of the carrier network 20 (step 82) which includes information from the service instance request. The network management/control plane 8 of the carrier network 20 processes the service instance request information and generates compression information which is associated with the service instance request SID header field (step 84) and sends this to the appropriate compression information stores associated with the ingress/egress nodes of the carrier network 20 (step 86).

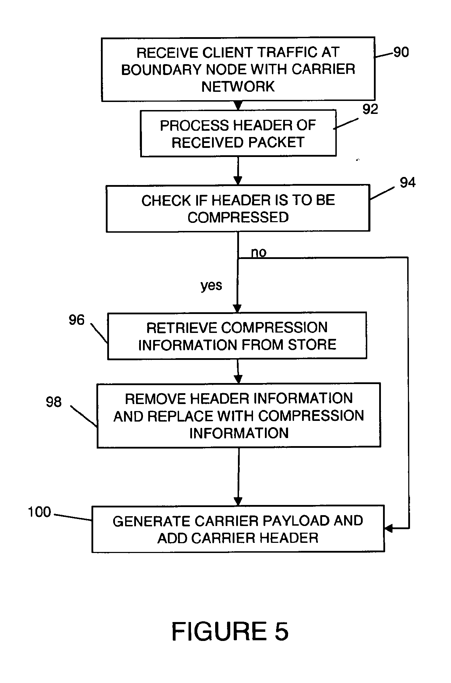

Figure 5 shows steps in a header compression process which is performed by node 18 when providing ingress to the carrier network 20. When node 18 receives frame 40 (step 90) it processes header 48 to perform a look up operation which determines that the traffic frame 40 is to be forwarded to a node 22 in carrier network 20 (step 92). A header compression scheme is either automatically implemented, or instead, header compression may be selective and performed only on selected frames. In the embodiment shown in Figure 5, the node then determines if that particular frame is to be compressed (step 94) by checking if the forwarding table includes an indicator that the header frame is to be compressed, for example, by compressing everything associated with the same service instance. This means that for a session the compression indicator is based on one or more header indications.

If no compression indicator is determined to be present in the forwarding table in step 94, then frame is then processed conventionally, for example in the manner shown in Figure 3A where no header compression takes place, and the received frame is mapped conventionally into the payload of the carrier frame and a carrier header is appended (step 100). If a compression indicator is found in step 94, then node 18 sends one or more header fields sufficient to uniquely identify a traffic flow and/or service instance to the compression store to locate and retrieve the correct compression key for that traffic flow and/or service instance (step 96), referred to herein as index header fields. The node then implements the header compression scheme by replace header information 48 of the client frame 50 in first network 12 with the compression information 60 (step 98). The header information 48 which is replaced comprises either a predetermined number of header fields or the entire header 48 of the client frame 40. Once the client header information 48 has been removed and replaced with compression information 60, the payload 46 and compression information 60 is mapped to the payload 52 of the carrier frame 50 and a carrier frame header 54 is appended (step 100).

Thus one or more (but preferably all) header fields from the received client frame 40 are replaced by compression information 60 which has a small bandwidth requirement. The carrier frame 50 including the compression information 60 is then forwarded over carrier network 20 to the next node (in the exemplary network shown in Figure 1 this would be WAN node 22).

Optionally, a compression indicator is included in the carrier header 54 to indicated that its payload 52 contains a compressed header. For example, a compression indicator is provided in the form of a special Ethertype value (shown as ETxxxx in header 54 Figure 3B) in one embodiment of the invention. The frame is then transmitted on to the nodes 22, 24, 26 along the predetermined path for that traffic flow/service instance in the carrier network 20. Nodes 22, 24 will process the carrier frame 50 and its header 54 in a conventional manner however, when the carrier frame is received by node 26, it will be processed differently to restore the header information.

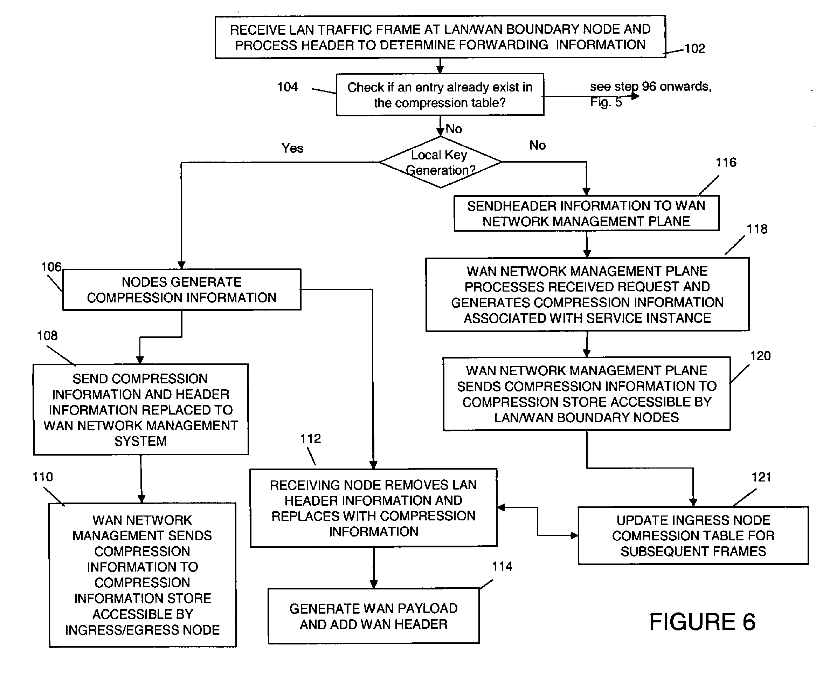

Figure 6 shows an alternative embodiment of a method of generating compression information dynamically at the ingress node 18 to carrier network 20. In Figure 6, when node 18 receives a request for a new service instance (or a new traffic flow), the forwarding look-up operation that node 18 performs triggers the generation of the compression information 60 if this determines a carrier network is to be used.

In Figure 6, two alternative methods of dynamically generating compression information in this way are shown. When a boundary node 18 between the first network 12 and carrier network 20 receives a frame 40, the outmost header 48 of the received frame 40 is processed in order to perform a look-up operation performed using a forwarding table. If the look-up operation indicates the carrier network 20 is to be used by the frame 40, node 18 checks if compression information 60 already exists for the traffic flow and/or service instance to which the frame 40 belongs by performing a look-up operation for the compression data store which is associated with node 18.

If the compression information data store already contains compression information 60 for frame 40, then this is used to replace the client header information 48 of that frame, for example, by using a method such as that shown in Figure 5. If no compression information 60 is located in the data store, then compression information is dynamically generated either locally by node 18 itself (shown in the left-hand side of Figure 6) or by the carrier network management/control plane 8 (shown on the right-hand side of Figure 6) depending on the compression scheme adopted.

Local dynamic compression information 60 generation requires the carrier network ingress node 18 to generate compression information itself based on the header information 48 it has extracted from a received traffic frame (step 106). However, to enable the header information 48 the compression information 60 will replace to be recovered, node 18 communicates the compression information 60 in association with the header information 48 it has replaced to the carrier network management/control plane (step 108). The carrier network management/control plane 8 then sends the compression information 60 and associated header information 48 to a compression information store for use by a node 26 which provides egress for that traffic flow/service session from the carrier network 20. This enables the egress node 26 to de-encapsulate the compression information from the payload 52 of the carrier frame 50 restore the header information 48.

Accordingly, in the embodiment shown on the left-hand side in Figure 6, ingress node 18 removes one or more header fields from the received frame 40 and replaces these with the compression information 60 (step 112). Node 18 then places payload 48 and compression key 60 into the carrier payload 52 and appends a carrier header 54 (step 114). To enable subsequent frames belonging to the same service or traffic flow to be assigned the same compression header 60, either the carrier network ingress node 18 updates its compression information data store (see step 121) or the carrier network management/control plane 8 sends the compression information data to the compression table associated with node 18 to updates it (see step 112).

In this embodiment, there is a risk that the nodes may generate duplicate compression information depending on the way the compression information 60 is generated by node 18. Preferably, node 18 will generate compression information 60 randomly on a per received traffic flow/service request basis. Node 18 sends the details of the compression information 60, any index header fields required for subsequently assigning the same compression information 60 to another frame in the same traffic/service flow, and all header information that the compression information is to replace in the carrier network 20 to the network management/control plane 8 (step 108). The WAN network management/control plane 8 then sends the compression information including the associated index fields and header fields to the egress node 26 for that particular traffic flow or service instance (step 110) and can at this point optionally perform a check for any compression key duplication, which if found could generate an alert to node 18 to reassign another compression key.

In Figure 6, the right-hand side shows an embodiment in which the carrier network management/control plane 8 generates compression information 60 dynamically in response to a request from ingress node 18. Node 18 sends the request for compression information to be generated by providing the header information which the compression key is to replace to the network management/control plane 8 (step 116). The request may also indicate which header fields are to subsequently function as index header fields for retrieving the compression key from the compression information data store associated with the ingress node 18. The network management/control plane 8 responds by processing the request and generates an appropriate compression key 60. The compression key 60 and index field information are then sent to the compression information store used by the ingress node 18 to the carrier network 20 and the key 60 and the replaced header field information are sent to the compression store used by the egress node 26.

Whichever method is used to generate the compression key 60, the compression key and the replaced header fields must also be sent to the egress node for the carrier network 20 and the compression key and the index-header fields required to retrieve the compression key must be sent to the compression information data store associated with the ingress node 18 for the carrier network 20. As previously mentioned, the format of the compression key 60 can take any suitable form but the inventor's preference is for a format which conforms to that used by the Multi-Protocol Switching Label label format.

To retrieve the correct key to replace header fields in a traffic flow and/or service session over the carrier network, the ingress node 18 uses one or more index-header fields. The index-header fields can comprise any suitable combination of one or more header fields which are sufficient to identify a traffic flow, for example, a tuple of SA, DA and VLAN-ID are used as index fields. These index fields used to look-up the appropriate compression key 60 need not comprise all the header fields the compression key 60 is to replace.

The index header fields may be included in the User Network Interface (UNI) specification that client networks must conform to if a compressible frame 40 received from a client network 12 is to have its header fields mapped to the pre-assigned compression key at the ingress node 18 to the carrier network 20. Alternatively, a compression scheme can be implemented based on a single header field such as the Service Identifier header field which is provided in PBB-TE frames. For example, in one embodiment of the invention, a service instance is created to carry any traffic which is to be compressed. The service instance relates generally to heterogeneous traffic, i.e., mixed types of traffic such as, for example, VoIP and other types of compressible traffic but in alternative embodiments a service instance relates to a single traffic type.

All frames mapped to this service instance are compressed by the edge node 18 to the carrier network 20. For example, if the carrier network is a PBB-TE network and node 18 comprises an I-Component node, then the client frames 40 can be mapped to service instances by node 18. One or more compression table entries are then needed per service instance depending how many unique headers fields 48 are mapped to the service instance. It is also possible to use an application profile to indicate that a frame is to be compressed, for example, if a service instance only carries VoIP then it will be compressed.

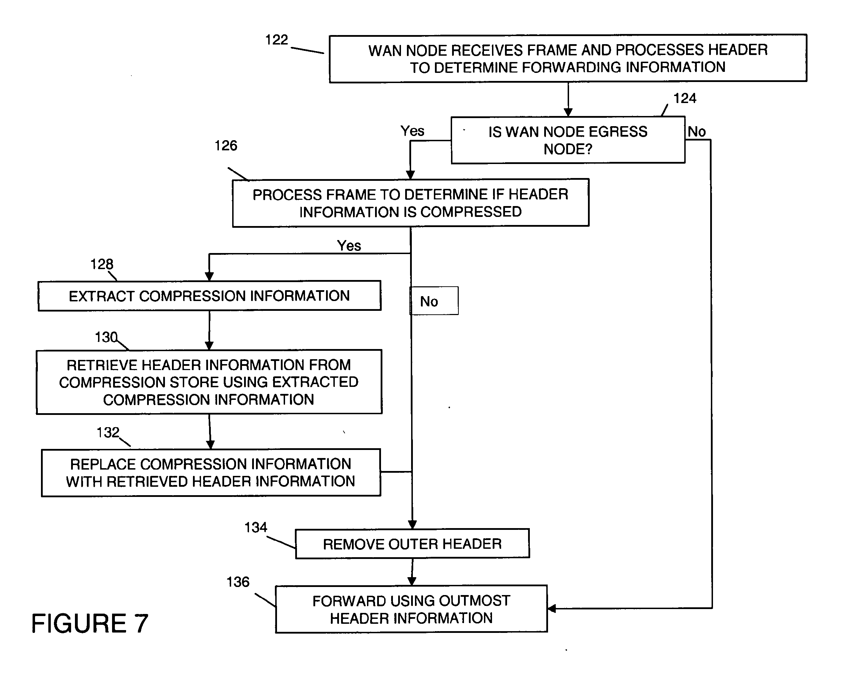

As previously mentioned, in either case, the compression key 60 is transported as payload 52 in the carrier frame 50 as it is forwarded across the carrier network 20 until the carrier frame 50 reaches the egress node 26, where a de-compression process is performed which is described in more detail with reference to Figure 7.

In Figure 7, carrier node 26 receives traffic frame 50 and processes its header 54 in a conventional manner to determine forwarding information (step 122). The processing determines if the traffic is to be forwarded to another node within the carrier network 20 or to a node 28 outside the carrier network 20 (step 124). If the traffic is to remain within carrier network 20, then the forwarding process continues in the conventional manner based on the outmost header (the carrier header 52) (step 136). If, not, then header 54 is processed to determine if a compression indicator is present (step 126). If no indicator is found in the header 54, carrier frame 50 is processed to remove the carrier header 54 (step 134) and the next outmost header 48 will is used to forward frame 40 (step 136). At this point in some embodiments, however, the presence of the compression key will be found at this point, in which case this will then also function as a compression indicator.

When a compression indicator is found, the received frame 50 is processed to extract the compression key 60 (step 128) from the payload of the carrier Ethernet frame 50. Alternatively, a special field such as an extension field of header 54 can provide the compression key and/or function as a compression indicator.

Once the compression key 60 has been extracted, it is used to retrieve all appropriate header information from a compression table (step 130) which has been populated by the network management/control plane 8. This can be done by a hashing operation for example, which uses the compression key as the hashing key to enable rapid retrieve of the header information. Once the header information has been returned to the egress edge node 26, the egress edge node 26 is able to regenerate the header fields 46 for frame 40 which the compression key replaced (step 132). The outer header is removed at a suitable point in the recovery operation for the original header (shown as step 134 in Figure 7). This enables connection oriented frame 40 to be forwarded within a third network 14 towards its destination address (for example, node 28 in LAN 14 as shown in Figure 1) (step 136).

When a succession of carrier networks implement a header compressions scheme according to the invention, the network management/control plane must provides details of a compression key to recover the header information which is suppressed in the new network.

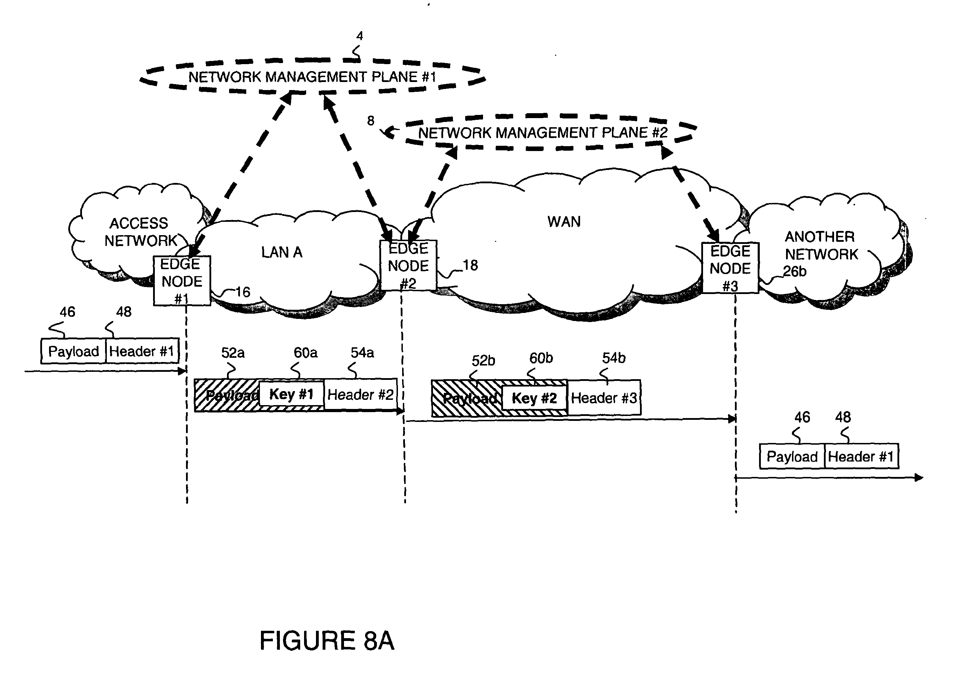

Figure 8A shows an exemplary scenario in which a header compression scheme according to the invention is implemented across a plurality of carrier networks.

In Figure 8A, a client connection-oriented Ethernet frame 39 comprises a payload 46 and header #1 (header 48). The client frame 39 is received by the edge node 16 between a connection-oriented Ethernet access network and LAN A which provides a carrier service. Carrier LAN A has a network management/control plane #1 and implements an embodiment of a header compression scheme according to the invention which replaces the header #1 48 used in the access network with compression key 60a which is carried within the payload 52a of carrier frame 50a within LAN A.

Node 16 also appends new header 54a to the payload 52a of carrier frame 50a which carries sufficient information for forwarding nodes of LAN A to forward the carrier frame within LAN A along a predetermined path towards its destination. The network management/control plane for LAN A also communicates header compression information to populate one or more compression tables accessible by at least the egress node in LAN A along the predetermined route with the compression key 60a and header information required to enable the header information removed from the node 16 to be recovered. Node 16 also adds a special header compression indicating Ethertype value to the header 54a which is used to indicate the header 54a is associated with a payload which includes a compression key 60a.

Accordingly, at node 18, when the LAN carrier frame 50a is received, header 54a will be processed to determine what forwarding action is to be performed. This will identify that the frame 50a is to be routed into the WAN and the presence of the compression indicator alerts node 18 to the need to recover the compressed header information from its compression table. Accordingly, node 18 will perform a header recovery method according to the invention which comprises a de-encapsulation operation to recover the compression key 60a from the payload 52a of frame 50a and uses this to perform a look-up operation on its compression table to restore the original client header information 48. The header used in LAN A will be removed and the compression key 60a is recovered from the payload 52a.

Node 18 then sends the compression key to the compression table associated with node 18 which uses the key to perform a look-up operation to determine a data record which contains the header information associated with that particular compression key. The header information is then returned to the node 18.

The original client frame 39 is at this point restored. However, the compression scheme is then repeated by node 18 but this time replacing the client header information with a compression key 60b which is for use within the WAN. Node 18 now removes the header information 48 which is to be replaced by the compression key 60b within the WAN, encapsulates the original client payload 46 and compression key 60b within the payload 52b of the WAN carrier Ethernet frame 50b, and appends a header 54b for uses provides a compression indicator in the form of a special Ethertype to the payload 52b.

The second compression key 60b is associated with the header information it has replaced within the WAN by the WAN network management/control plane (either statically or dynamically). The WAN network management/control plane 8 provides compression header information which associates the compression key 60b with the header information it has replaced in one or more compression tables associated with at least the egress node in the WAN along the predetermined path for that traffic frame. The outmost header 54b is then used for forwarding the frame 50b within WAN along the predetermined path in the WAN.

At the egress node 26b for the WAN, the header information is processed and forwarding table will indicate that the traffic frame is to exit the WAN. The presence of the special Ethertype indicates that the payload of the WAN contains a compression key which must be removed and replaced with header information from a compression table. Accordingly, a look-up operation will be performed by node 26b using the compression key 60b to retrieve the header information from its compression table. The header information is then restored to client frame 39 which is then forwarded by node 26b over another network.

The communications system shown in Figure 8A thus implements a compression scheme which does not require the two carrier networks to share information about their compression keys. As the frames are routed along a predetermined path, within each network the egress node will be known to the network management/control plane in advance, which means that the compression table for just the egress node needs to be populated with the headers which the compression key replaced. Moreover, within each network, the compression keys are set up on the basis of the same key being used by all frames in the same traffic flow and/or service request, so that the network management/control planes of each carrier network only needs to communicate the compression key once per traffic flow/server request to the relevant egress node. This greatly enhances the security of the carrier network as it is not possible within the remaining nodes of the network to determine anything about the client source and/or ultimate destination where this is outside the carrier network as all such information is conveyed separately by signaling sent in the network management/control plane from the ingress node to the egress node.

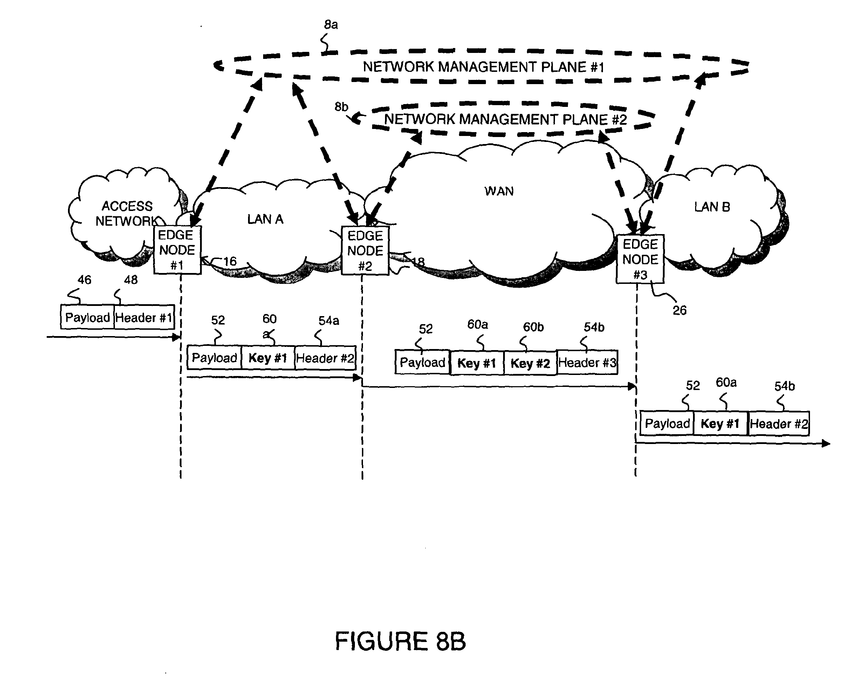

Figure 8B shows another embodiment of a communications system comprising a plurality of carrier networks within which header compression is implemented according to an embodiment of the invention. In Figure 8B the elements retain the numbering scheme shown in Figure 8A as appropriate.

In Figure 8B, the other network is now another carrier LAN, LAN B, which shares the same network management plane #1 as LAN A. This means that it is useful to retain the compression key 60a used in the first carrier network, LAN A, within the second carrier network (the WAN). Accordingly, now at the boundary node between the LAN A and WAN, the first compression key 60a is retained. The boundary node generates a new compression key 60b which is used to replace the header information used to forward traffic only within LAN A and LAN B. The new key 60b is replaces header #2 and is placed alongside the LAN payload 52a in the WAN payload 52b. A new header #3 (54b) is appended to the payload 52b for forwarding the frame within the WAN. At the edge of the WAN, compression key 60b is used to decompress and recover header #2, which is used for forwarding within LAN B. At an egress point to LAN B, the original header 48 can be recovered (not shown in Figure 8B).

A communications system such as that shown in Figure 8B will result in a series of compression keys being added each time a network boundary is crossed, each of which must be used in the correct order to recover the original payload and header #1. It is also possible to implement such a compression scheme which concatenates compression keys if the compression key information is communicated between network management/control planes so that at each boundary node the compression key and header information for each compression key carried is appended to the compression table(s) within the next carrier network so as to enable the inner header information to eventually be recovered. In such an embodiment, the header recovery process will be iterated recursively at a boundary node until the node performing the recovery process determines that there is no additional header compression to perform at that point.

The invention is advantageous as each time a header is conveyed across a carrier network, there is a bandwidth reduction. For example, if a redundant PBB/PBB-TE header is replaced with a 4-byte key, when a voice data packet is being carried across a single carrier network then the bandwidth efficiency is 64/(64+22+4) = 71%, i.e., as opposed to sending 64/(64+22+22) = 59% bandwidth efficiently if the full 22 bytes of redundant header information is retained. If more carrier networks are used, the compression scheme further improves bandwidth efficiency.
The compression key conforms in format to a form suitable either for carrying in payload or within a header fields or extension field to a header field. To facilitate the processing of the key, regardless of whether it is carried in payload or in a header or extension field, it may be provided in a format which is known in the art to be associated with the format required by a particular header field or take a format conforming to provided by the MPLS label field. When carried in payload, in the best mode of the invention currently contemplated by the inventors, the compression key is located immediately following the payload it is associated with and before the outmost header, as shown in Figure 6, and is retrieved using any appropriate method known in the art for extracting information from payload locations (such as a pointer mechanism?). In alternative embodiments of the invention, however, the compression key may be located elsewhere in the payload.

The value of the compression key is preferably selected randomly or selected randomly or in some preconfigured manner from a list of available keys, the latter requiring some monitoring scheme by the network management system to prevent duplication.

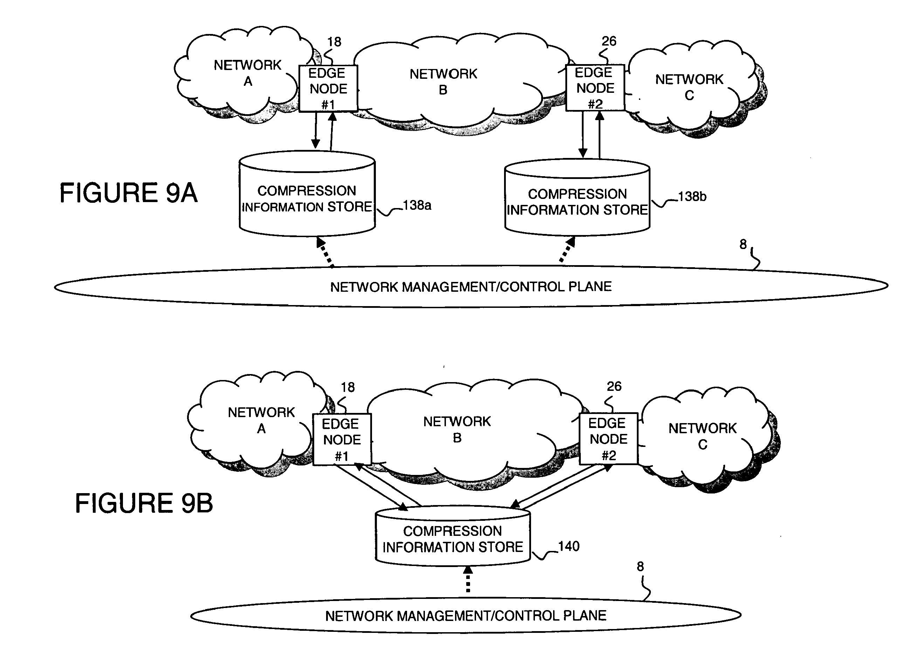

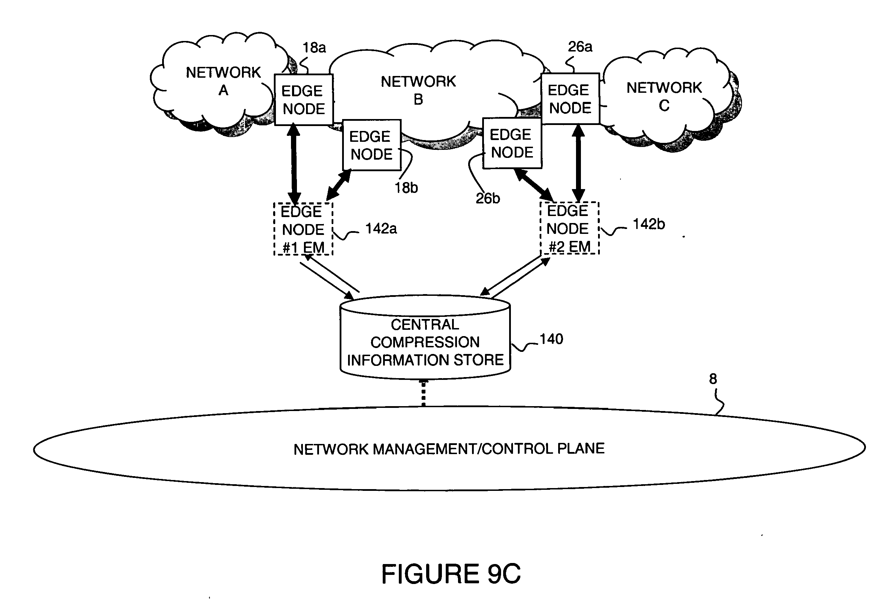

Figures 9A, 9B and 9C show the architecture of the compression information stores and how these can be distributed within the carrier network. The compression information can be appended as an extension to forwarding information and co-located with forwarding tables for the carrier network nodes. Alternatively, the compression information stores may have an independent architecture.

Figure 9A shows a local compression information storage architecture according to an embodiment of the invention in which boundary node 18 at the edge of the client network (shown as network A) and the carrier network (shown as Network B) is associated with a first compression table 138a. Egress node 26 of network B is associated independently with another compression table 138b and the network management/control plane 8 for the network ensures that appropriate signalling information is sent out to populate the compression table 138b of egress node and any other nodes in network B as appropriate.

Figure 9B shows a centralised compression information storage architecture according to another embodiment of the invention in which the network management plane 8 populates a single central compression store 140 to which the ingress node 18 and egress node 26 of the carrier network B must communicate with to determine which compression key is to be used to replace which header information. This increases the signalling overhead within the network.

Figure 9C shows a distributed compression storage architecture in which element managers 142a,b are each associated with a plurality of edge nodes (18a,18b,26a, 26b respectively). Each element manager 142a,b is associated with a central compression information store 138. The element managers 142a,b, push relevant compression information down towards the edge nodes which they retrieve on request from the compression table.

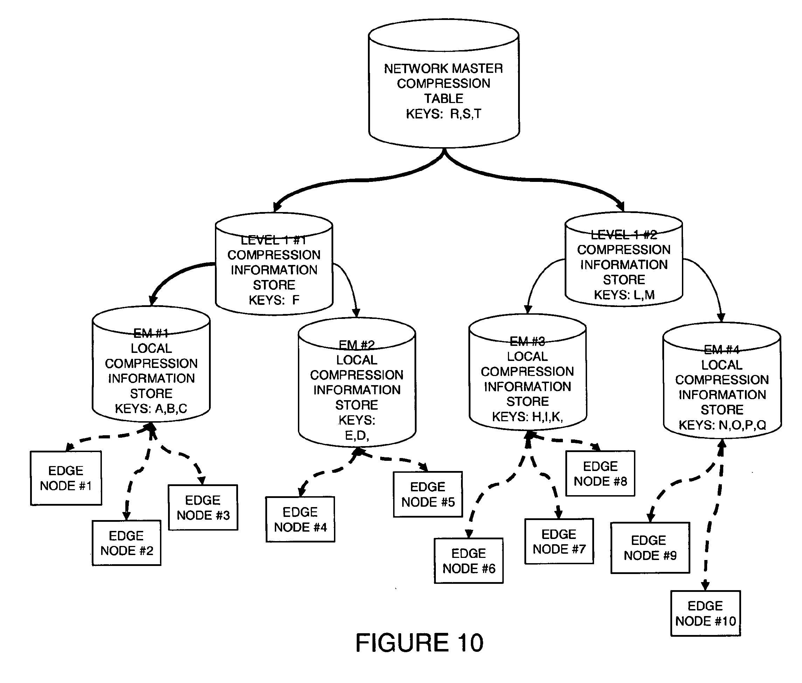

Figure 10 shows how compression information can be distributed in a hierarchical compression information storage architecture by element managers, in which element managers retrieve compression information for traffic flows and/or service session requests that the network management/control plane has determined will use the edge nodes with which they are associated. Those of ordinary skill in the art will appreciate that only an exemplary selection of keys are shown for clarity purposes only. The compression tables are arranged in a hierarchy so that the keys can be distributed within the network according to the connection-oriented path established by the control plane which will be sent to forwarding tables for the nodes in the network.

As shown in the schematic diagram of Figure 10, a master compression table contains the compression keys R,S,T which are available for replacing redundant header information for traffic flows which are across the carrier network and these keys are accessible by all edge nodes in the network. At the next level of the compression information hierarchy, there are two compression information stores, the left-hand side compression information store storing header information for compression keys F the right-hand side compression information store storing header information for compression keys L and M. These keys assigned to traffic flows and/or service requests which require traffic frames to move between the domains of each element manager and so are accessible to a larger number of nodes than the compression keys stored in the third level compression information stores which are associated with traffic flows/service sessions between nodes associated with the same element manager.

For example, as shown in Figure 10, EM#1 which is associated with edge nodes #1, #2, and #3 and holds compression keys A,B,C which are used by the edge nodes #1,#2,#3 for traffic flows only between the edge nodes #1,#2, #3. If edge node #1 receives a traffic flow (or service request) which requires a connection-oriented path to be established within the carrier communications network to edge node #4, then it will need to use a compression key which is stored at a location accessible by the edge node #4, here the right-hand side compression information store at the second level of the compression store hierarchy, for example, key F. If edge node #2 receives a traffic flow (or service request) which requires a connection-oriented path to be established within the carrier communications network to edge node #10 say, then it uses a compression key from the compression information store accessible to edge node 10#, for example, compression key S from the master compression table shown in Figure 10.

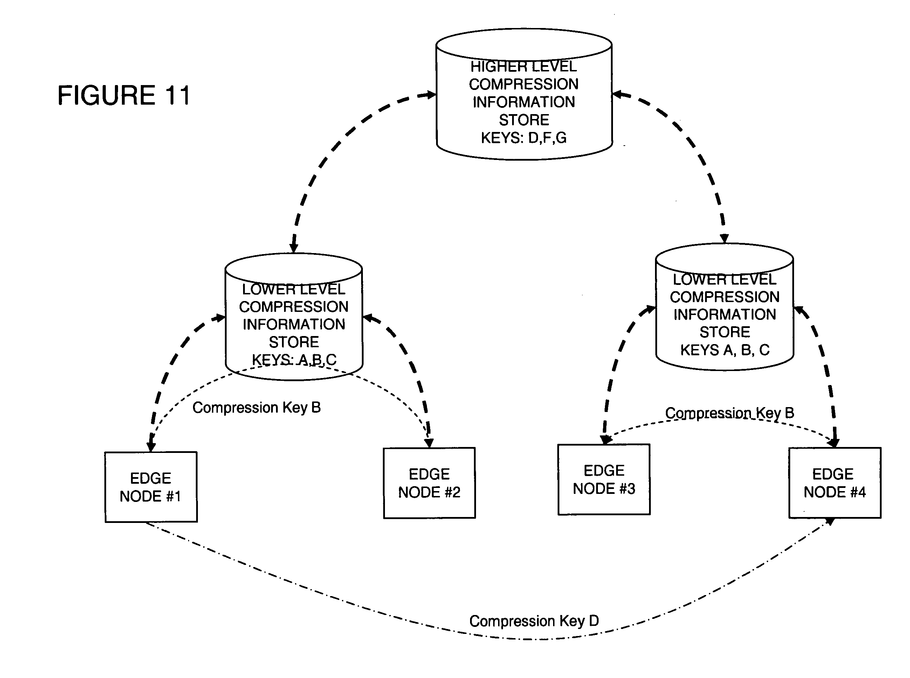

The compression information architecture of Figure 10 requires in practice a potentially huge number of compression keys to be generated and managed by the network management/control plane. To reduce the number of compression keys which are stored in the network, Figure 11 shows how compression information can be reused in a hierarchical compression information storage architecture. As the compression information is pushed down from a central store to each element manager which then only pushes down compression keys for the traffic flows with which its edge nodes are associated with using the forwarding tables, it is possible for compression keys to be reused by nodes where there is no possibility of traffic flows and/or service requests with the same compression key using the same node. In Figure 11, there are only 6 compression keys available. Compression keys A,B,C are used for traffic flows/service sessions between nodes within the element manger domain #1 and compression keys A,B, and C are reused for traffic flows between nodes within another element manager domain #2. Compression keys D,E,F are used for traffic flows between the element manger domains, for example, from edge node #1 to edge node #4.

This is shown schematically in Figure 11 by traffic flowing along the dashed path from ingress edge node #1 to egress edge node #2 across the carrier network using compression key B which is also used in the other element manager domain for the traffic flow from ingress edge node #3 to egress edge node #4. However, a higher level compression key, here compression key D is used when sending traffic from ingress edge node #1 to egress edge node #4 across the same carrier network. The embodiment of the invention shown in Figure 11, enables, for example, compression key re-use for traffic flows in a carrier network in which the ingress and egress nodes for a traffic flow are geographically disparate from other ingress and egress nodes. For example, a traffic flow from a first node in one city to a second node in the same city may use the same local compression key as the local compression key used for another traffic flow from a first node in a different city to another node in that city.

The above description of the preferred embodiments does not include known functional equivalents or obvious modifications to the features described where these are apparent to one of ordinary skill in the art. As will be appreciated by those of ordinary skill in the art, where specific reference has been made to a LAN or WAN, these references can be replaced with first and/or second network etc as appropriate to distinguish the networks, the use of the terms LAN and WAN being primarily to indicate the different networks and/or different carrier networks. Where specific reference is made to LAN or WAN in the above description, those of ordinary skill in the art will appreciate that the above embodiments are not limited to specific types of geographical network domains such as LANs and WANs but can be applied in any scenario where a connection-oriented Ethernet traffic carrier service is being provided to other Ethernet traffic.

It is possible to supplement the above embodiments of a compression scheme according to the invention with additional compression schemes, for example, header fields 44 shown in Figure 2 can be compressed either using other known compression schemes, to further increase bandwidth efficiency in the carrier network 20, or in conjunction with the first network header fields 48. For example, if the PBB-TE header 48 and the other L2 headers 44 can be collectively replaced by a single compression key 60, although a larger compression store data record is then required store the replaced header information and the associated compression key than if just the PBB-TE header 48 is being replaced.

When a longer key is required and the key is an MPLS label, standard MPLS label stacking could be used to double the key size. One MPLS label can provide a 20-bit key. A 2-level label stack can provide a 40-bit key and the MPLS label stack level can be increased as required.

The compression schemes described by the above embodiments of the invention enable the headers of connection-oriented Ethernet traffic frames to be compressed when received by the relevant edge nodes as they implement the forwarding operation. This enables the headers to remain compressed from end-to-end along the path they are forwarded along between end-stations as the compressed headers remain transparent to intermediate nodes.

The compression information data stores (also referred to herein also as compression tables) can be managed by the existing network management/control plane system of the carrier network and can also be associated with forwarding table information stores.

The compression information is not generated from the header's it replaces, and so it is reasonably secure to send this information over a carrier network as it is only at the egress node to the carrier network that the original header information can be recovered. Once a compression table entry has been set up for a particular traffic flow/service instance, all frames in that traffic flow/service instance will utilise the same compression key without needing to signal this across the network which further reduces the amount of signalling required to manage a compression technique according to the invention.

Those of ordinary skill will find it apparent that more than one level of encapsulation using a key-based look-up is possible, and where this is required, the keys can be concatenated, as Figure 8B showed. In this way, by replacing header fields with a key having a smaller size than the original header, the size of the frame is not increased significantly each type a header field is replaced. For example, a MPLS shim label of 4 bytes could replace a MAC header field of 22 bytes.

The term Ethernet frame is used herein as this is the standard term used to refer to a unit of Ethernet traffic, whether connection-less and/or connection-oriented. The header information which is replaced may comprise connection-less and/or connection-oriented Ethernet traffic information, providing the appropriate header information is propagated within the carrier network for retrieval at the egress node to the carrier network.

In the above embodiments, within the carrier Ethernet frames an identifier can be provided in the form of a special Ethertype which indicates that the carrier Ethernet frame contains compression information which should either be removed before the frame is forwarded out of that carrier network. However, it is possible also for a special Ethertype to indicate that compression information is to be retained for removal by another carrier network if the compression key information is to be communicated by the network management/control planes between the first carrier network and the other carrier network.

Those of ordinary skill in the art will appreciate that in Figure 1, only those nodes necessary to demonstrate the flow of traffic were shown for the sake of clarity and that in practise a far larger number of nodes may be provided in each network and that the communications links and traffic flow which were shown in Figure 1 as simply unidirectional can support uni- and/or bi-directional communications between network nodes in other embodiments of a communications system in which the invention in implemented.

The term network management/control plane is used herein above to indicate a network management and/or control plane which provides control and signalling data to the network nodes which providing a traffic forwarding function within the network. The network management/control plane can be implemented remotely from the network nodes and/or as adjunct processors in any appropriate manner known to those of ordinary skill in the art.

The communications system shown in Figure 1 comprises separate network management/control planes for the plurality of networks comprising the communications system, but in other embodiments of the invention the networks in the communications system may share the same network management/control plane. The form of client traffic which is carried over the carrier network can be either connection-less or connection-oriented Ethernet but the traffic provided within the carrier network is connection-oriented.

This enables in one embodiment of the invention for a method to be provided which reduces the bandwidth required to send a plurality of client traffic frames 40 over a carrier communications network 20 arranged to provide a carrier service to said client traffic frames 40. As shown in Figure 2, each client frame 39 comprises client header information 48 and client payload 46 and was connection-oriented itself. However, it is possible for the client frame 39 to conform instead to a connection-less Ethernet communications protocol. The header compression method according to this embodiment, comprises at an ingress node 18 of said carrier network 20, determining redundant header information (one or more or all fields of the client header information 48). The header information is redundant in the carrier network (WAN 20 in Figure 1) which is not used for forwarding said client frames in said carrier network, replacing at least part or all of said redundant header information 48 with compression information 60 having a smaller bandwidth than said replaced header information 48, and appending header information 54 to the payload of each said client frame to enable said client frame to be capable of being forwarded along a path in said carrier network to an egress node of said carrier network. The node 18 then sends the carrier traffic frame 50 comprising the client payload 46 and the carrier's header information 54 over the carrier network 20. At an egress node 26 of said carrier network 20, the method comprises processing each received carrier traffic frame 50 to extract compression information 60 from each received traffic frame 50. The extracted compression information is then used to perform a look-up operation which retrieves the replaced redundant header information 48 from a data store 138, 140. The client frame 40 is then restored by appending the header information 48 retrieved from said data store 138,140 to the client payload 46.

The same compression information is used to replace the same redundant header information for all said traffic having the same set of header characteristics. The ingress node 18 needs to send the replaced header information and the associated compression information 60 to the data store 138, 140 from which they can be retrieved when egress node 26 receives the corresponding traffic frames. However, the compression information 60 and replaced header information 48 is sent only once over the network management/ control plane 8 of WAN 20, whereas a plurality of traffic frames will use each particular compression information 60 within WAN 20, which produces overall a bandwidth reduction for all of the client traffic characterised by having the same header information 48 replaced by the same compression information 60. As an example, a plurality of client traffic frames can be characterised by having at least the same source address and destination address, or by having the same source address, destination address and virtual local area network identifier. Alternatively, or in addition to the above header fields being the same, a plurality of client traffic frames can be characterised by sharing the same service session identifier.

The compression information has a data format which enables it to be capable of being sent by a network management and/or control plane of the carrier network in association with the redundant header information it has replaced to a data store 138,140 accessible in the carrier network. The data store 138,240 needs to be one accessible by the egress node for the traffic associated with a particular compression key. The egress node is capable of being determined from the path established for the carrier traffic as the carrier network is connection-oriented.

It is also possible, as has been described herein above, for the compression information to be established when the client traffic is received by the client network. For example, if the client network is connection-oriented, then the compression information 60 can be sent to said network management and/or control plane 8 of said carrier network 20 by a network management/control plane 4 of the client network 12 for example, when the predetermined path for said traffic is established in the client network 12 as determining the path to the egress node 16 to client network 12 also establishes the egress node 16 as the ingress node 16 to the carrier network 20. Alternatively, the compression information 60 is generated when an ingress node 16 to the carrier network 20 receives said the client traffic 40.

In the best modes of the invention, the client traffic comprises Ethernet traffic and the carrier network 20 provides a connection-oriented Ethernet carrier service to said Ethernet client traffic, and said compression key replaces the Ethernet header of each frame of said client traffic in said carrier network. The client traffic conforms preferably to the PBB or PBT or PBB-TE Ethernet communications protocols. The same compression key replaces the entire header for each frame of client traffic having the same service session identifier field value in the client header. In addition to and/or alternatively the same compression information is used for each frame of client traffic in the same client traffic flow. The compression information conforms to the data format of one or more standard multi-protocol label switching (MPLS) standard communications protocol label data values.

The compression information is placed either in a predetermined header field of the carrier frame and/or in a predetermined position in said payload to which said carrier header is appended for forwarding in said carrier network. If placed into payload, in one embodiment, the carrier frame comprises a connection-oriented Ethernet frame which includes an Ethertype value to indicates the carrier frame payload includes said compression information for a client traffic frame. In other embodiments, other header fields can be used as appropriate for the particular communications protocol being implemented to determine a characteristic of the client traffic that indicates it is to follow a particular path from source to destination.

The term frame is used herein as a synecdoche for packet, cell, or any other appropriate term indicative of a traffic unit in a connection-oriented communications protocol which is suitable for implementing a header compression scheme according to the invention.

There are many more potential modifications to the embodiments of the invention described herein which are apparent to those of ordinary skill in the art and the scope of the invention should be accordingly determined by the accompanying claims.

## Claims

1. A method of reducing the bandwidth required to send a plurality of client traffic frames over a carrier communications network arranged to provide a carrier service to said client traffic frames, each client frame comprising client header information and client payload, the method comprising at an ingress node of said carrier network:
determining redundant header information which is not used for forwarding said client frames in said carrier network;
replacing at least part or all of said redundant header information with compression information having a smaller bandwidth than said replaced header information; and
appending header information to the payload of each said client frame to enable said client frame to be capable of being forwarded along a path in said carrier network to an egress node of said carrier network;
wherein the same compression information is used to replace the same redundant header information for all said traffic having the same set of header characteristics.

2. A method as claimed in claim 1, further comprising at the egress node of said carrier network:
processing each received traffic frame to extract compression information from each received traffic frame;
using the extracted compression information to perform a look-up operation which retrieves the replaced redundant header information from a data store; and
restoring the client frame by appending the header information retrieved from said data store to the client payload;.

3. A method as claimed in any previous claim, wherein said set of header characteristics comprises at least one or more header fields taken from a group including one or more of the following:
a header field which uniquely identifies a source address of the client traffic; and/or
a header field which uniquely identifies a destination address of the client traffic; and/or
a header field which unique identifies a virtual local area network identifier of the client traffic; and/or
a service session identifier for said client traffic.

4. A method as claimed any previous claim, wherein said compression information is generated when a predetermined path for said traffic over said carrier network is determined.

5. A method as claimed in any previous claim wherein at least some of said client traffic received by said ingress node conforms to a connection-less Ethernet protocol.

6. A method as claimed in any previous claim, wherein at least some of said client traffic received by said ingress node conforms to a connection-oriented Ethernet protocol.

7. A method as previous claim, wherein said carrier traffic conforms to a connection-oriented Ethernet protocol.

8. A method as claimed in any previous claim, wherein said client traffic comprises Ethernet traffic and said compression information conforms to the data format of one or more standard multi-protocol label switching (MPLS) standard communications protocol label data values.

9. A method as claimed in any previous claim, wherein the same compression information is used for each frame of traffic in the same traffic flow.

10. A method as claimed in any previous claim, wherein said compression information is placed in the client payload prior to said carrier header information being appended to said client payload.

11. A method as claimed in any previous claim, wherein said compression information is placed in said carrier header information.

12. A method as claimed in any previous claim, wherein the same compression key is used for each frame of traffic in the same traffic flow.

13. A method as claimed in any previous claim, wherein the carrier frame comprises a connection-oriented Ethernet frame including an Ethertype value which indicates the carrier frame payload includes said compression information for a client traffic frame.

14. A communications system comprising a first communications network and at least one carrier communications network, the communications system being arranged to reduce the bandwidth required to send traffic comprising a payload and a header from said first network over said carrier network, the traffic being **characterised by** one or more header fields from which a path from its source to destination can be predetermined, the system comprising:
a boundary node at a boundary between said carrier network and said first network; and
an egress node in a carrier network;
wherein the boundary node comprises one or more components arranged to:
determine redundant header information which is not used for forwarding said traffic in said carrier network;
replace at least part or all of said redundant header information with compression information having a smaller bandwidth than said replaced header information; and
append header information to said traffic to enable forwarding along said path in said carrier network to said egress node; and
wherein the egress node comprises one or more components arranged to:
process said received traffic to remove the appended header information and restore the replaced header information by removing the compression information; and
use the compression information to perform a look-up operation which retrieves the replaced redundant header information from a data store, and
wherein the same compression information is used to replace the same redundant header information for all said traffic having the same header characteristics along said predetermined path in said communications system.

15. A communications node arranged in use in a communications system as claimed in claim 14, the node comprising one or more components arranged to:
determine redundant header information which is not used for forwarding said traffic in said carrier network;
replace at least part or all of said redundant header information with compression information having a smaller bandwidth than said replaced header information; and
append header information to said traffic to enable forwarding along said path in said carrier network to said egress node.

16. A communications node arranged in use in a communications system as claimed in claim 14, the node comprising one or more components arranged to:
process said received traffic to remove the appended header information and restore the replaced header information by removing the compression information; and
use the compression information to perform a look-up operation which retrieves the replaced redundant header information from a data store.

17. A data store comprising compression information, the data store being arranged for use by an egress node in the communications system as claimed in claim 14.

18. Apparatus arranged to reduce the bandwidth required to send a plurality of client traffic frames over a carrier communications network arranged to provide a carrier service to said client traffic frames, each client frame comprising client header information and client payload, the apparatus comprising an ingress node of said carrier network having one or more components arranged to implement in software and/or hardware:
means to determine redundant header information which is not used for forwarding said client frames in said carrier network;
means to replace at least part or all of said redundant header information with compression information having a smaller bandwidth than said replaced header information; and
means to append header information to the payload of each said client frame to enable said client frame to be capable of being forwarded along a path in said carrier network to an egress node of said carrier network;
wherein the same compression information is used to replace the same redundant header information for all said traffic having the same set of header characteristics.

19. Apparatus arranged to reduce the bandwidth required to send a plurality of client traffic frames over a carrier communications network arranged to provide a carrier service to said client traffic frames, each client frame comprising client header information and client payload, the apparatus comprising an egress node of said carrier network having one or more components arranged to implement in software and/or hardware:
a receiver for receiving communications traffic;
a processor suitable for processing received traffic in order to extract compression information from each received traffic frame;
means arranged to use the extracted compression information to perform a look-up operation on a data store to retrieve from the data store the replaced redundant header information associated with said extracted compression information; and
means to restore the client frame by appending the header information retrieved from said data store to the client payload;
